# EUROPÄISCHE PATENTANMELDUNG

(11) **EP 0 965 466 A1**
(43) Veröffentlichungstag der Anmeldung: **22.12.1999**
(21) Anmeldenummer: 99112011.4
(22) Anmeldetag: 21.06.1999
(51) Int. Cl.: B60D 1/02

(54) **Kardanische Anhängekupplung**

(30) Priorität: 19.06.1998 DE 29811040 U; 14.07.1998 DE 29812542 U
(71) Anmelder: Schnabl, Paul, 80935 München (DE)
(72) Erfinder: Schnabl, Paul, 80935 München (DE)
(74) Vertreter: Schaumburg, Thoenes & Thurn

(57) **Zusammenfassung**

Bei einer Anhängekupplung für ein Fahrzeug, insbesondere für ein Nutzkraftfahrzeug, mit einem um eine in Längsrichtung des Fahrzeuges verlaufende erste Schwenkachse (S) schwenkbaren Kupplungskopf (12), in dessen Kupplungsmaul (14) ein verstellbarer Kupplungsbolzen (22) zum Ankuppeln einer in das Kupplungsmaul (14) eingeführten Zugöse einer Anhängevorrichtung ragt, wobei der Kupplungskopf (12) um eine senkrecht zur Bolzenlängsachse (B) des Kupplungsbolzens (22) verlaufende zweite Schwenkachse (H) schwenkbar ist, schneidet die zweite Schwenkachse (H) die Bolzenlängsachse (B) des Kupplungsbolzens (22).

## Beschreibung

Die Erfindung betrifft eine Anhängekupplung für ein Fahrzeug, insbesondere für ein Nutzkraftfahrzeug, mit einem um eine in Längsrichtung des Fahrzeuges verlaufende erste Schwenkachse schwenkbaren Kupplungskopf, in dessen Kupplungsmaul ein verstellbarer Kupplungsbolzen zum Ankuppeln einer in das Kupplungsmaul eingeführten Zugöse einer Anhängevorrichtung ragt, wobei der Kupplungskopf um eine senkrecht zur Bolzenlängsachse des Kupplungsbolzens verlaufende zweite Schwenkachse schwenkbar ist.

Mit einer derartigen Anhängekupplung kann bei einem Nutzkraftfahrzeug wie einem Lastkraftwagen, einem Lastzug, einer Zugmaschine oder auch einem Transporter beispielsweise ein zu ziehender Anhänger oder ein abzuschleppendes Fahrzeug an das Nutzkraftfahrzeug angekuppelt werden. Die Anhängekupplung ist üblicherweise am Heck des Nutzkraftfahrzeuges mittig angeordnet. Bei Sonderfahrzeugen wie Abschleppfahrzeugen kann zusätzlich auch im Frontbereich des Fahrzeugs eine entsprechend ausgebildete Anhängekupplung vorgesehen sein. Das anzuhängende Fahrzeug, beispielsweise ein Zentralachsanhänger, ist mit einer Anhängevorrichtung ausgestattet, an deren freiem Ende eine Zugöse vorgesehen ist, die an den in das Kupplungsmaul des Kupplungskopfes ragenden Kupplungsbolzen angekuppelt werden kann.

Zum Ausgleich eventuell während der Fahrt auftretender Torsionsbewegungen zwischen dem ziehenden und dem angehängten Fahrzeug um die Längsachse des Fahrzeugzuges ist der Kupplungskopf um eine in Längsrichtung des Fahrzeuges verlaufende erste Schwenkachse an diesem schwenkbar gelagert. Um durch Bodenunebenheiten entstehende Relativbewegungen zwischen den beiden Fahrzeugen in vertikaler und horizontaler Richtung ausgleichen zu können, ist zwischen dem Kupplungsbolzen und der Zugöse ein so großes Spiel vorgesehen, daß sich die Zugöse bei kleineren Relativbewegungen nicht verkantet. Ferner ist die Einführöffnung des Kupplungsmaules trichterförmig gestaltet, damit die Zugöse beispielsweise bei Kurvenfahrten relativ zum Kupplungsbolzen verschwenkt werden kann. Eventuell auftretende Relativbewegungen zwischen der Zugöse und dem Kupplungsbolzen in vertikaler Richtung werden ermöglicht, indem der Kupplungskopf um eine senkrecht zur Längsachse des Kupplungsbolzens verlaufende zweite Schwenkachse schwenkbar ist. Zu diesem Zweck ist bei der bekannten Anhängekupplung zwischen der Zugstange der Anhängekupplung, mit der der Kupplungskopf am Fahrzeug um die erste Schwenkachse schwenkbar befestigt ist, und dem Kupplungskopf ein Schwenklager vorgesehen, das die zweite Schwenkachse definiert. Das Schwenklager ist bei dieser bekannten Anhängekupplung mit Abstand zum Kupplungsbolzen angeordnet, um die zuvor beschriebene trichterförmige Gestaltung der Einführöffnung des Kupplungsmaules zu ermöglichen.

Neben der horizontal gerichteten Zugkraft greift während des Fahrbetriebes des Fahrzeugzuges durch die Zugöse am Kupplungsbolzen beim Abbremsen auch eine Schubkraft an, die sich aus einer horizontalen und einer vertikalen Kraftkomponente zusammensetzt. Ferner wird durch die Masse des angehängten Fahrzeuges eine Stützlast in vertikaler Richtung verursacht.

Bei sogenannten Starr-Deichselanhängern, wie beispielsweise Zentralachsanhängern, ist die Anhängevorrichtung starr mit dem Rahmen des Anhängers verbunden, so daß ein Großteil der Masse des Anhängers als Stützlast auf den Kupplungskopf einwirkt. Aufgrund des Abstandes des Kupplungsbolzens zum Schwenklager, mit dem der Kupplungskopf um die zweite Schwenkachse schwenkbar am Fahrzeug gelagert ist, wird durch die vertikale Stützlast ein Kippmoment erzeugt, durch das der Kupplungskopf um die zweite Schwenkachse geschwenkt wird. Da die maximal zulässige Stützlast bei diesen bekannten Anhängekupplungen üblicherweise auf 50 kg beschränkt ist, können diese Anhängekupplungen nicht zum Ankuppeln von Starr-Deichselanhängern verwendet werden.

Es ist Aufgabe der Erfindung, eine Anhängekupplung der eingangs genannten Art so weiterzubilden, daß sie auch für angehängte Fahrzeuge verwendbar ist, bei denen hohe Stützlasten entstehen.

Diese Aufgabe wird bei einer Anhängekupplung der eingangs genannten Art dadurch gelöst, daß die zweite Schwenkachse die Bolzenlängsachse des Kupplungsbolzens schneidet. Vorteilhafte Weiterbildungen ergeben sich aus den Unteransprüchen.

Bei der Erfindung ist der Abstand der zweiten Schwenkachse zur Bolzenlängsachse des Kupplungsbolzens Null, so daß bei einer von der Zugöse auf den Kupplungsbolzen übertragenen vertikalen Kraft am Kupplungskopf kein Kippmoment entstehen kann, durch das der Kupplungskopf um die zweite Schwenkachse geschwenkt würde. Der Kupplungskopf kann deshalb auch Stützlasten aufnehmen, die sehr viel höher sein können als die maximal zulässigen Stützlasten bei bekannten Anhängekupplungen.

Bei einer bevorzugten Ausführungsform der Anhängekupplung schneiden sich die erste und die zweite Schwenkachse des Kupplungskopfes. Dadurch wird die Entstehung von Drehmomenten um die erste Schwenkachse verhindert, die durch quer zur Längsrichtung des Fahrzeuges verlaufende, am Schnittpunkt der zweiten Schwenkachse mit der Bolzenlängsachse angreifenden Kräfte entstehen.

Ferner ist es von Vorteil, wenn die zweite Schwenkachse und ein Kupplungsmittelpunkt, in dem sich die Bolzenlängsachse des Kupplungsbolzens und die Längsachse der Anhängevorrichtung schneiden, in einer parallel zur Längsrichtung des Fahrzeuges verlaufenden gemeinsamen Ebene liegen. Durch diese Art der Anordnung der zweiten Schwenkachse relativ zum Kupplungsmittelpunkt, an dem die von der Zugöse an den Kupplungsbolzen übertragenen Kräfte angreifen, wird vermieden, daß durch die übertragenen Kräfte Drehmomente an der zweiten Schwenkachse entstehen.

Bei einer vorteilhaften Weiterbildung der Erfindung ist der Kupplungskopf zusätzlich um eine mit der Bolzenlängsachse des Kupplungsbolzens zusammenfallende dritte Schwenkachse schwenkbar. Durch das Zusammenwirken der drei Schwenkachsen miteinander kann der Kupplungskopf in unterschiedlichste Positionen relativ zum Fahrzeug bewegt werden. Auf diese Weise wird erreicht, daß einerseits Relativbewegungen zwischen dem Fahrzeug und dem Anhänger in vertikaler Richtung sowie während der Fahrt auftretende Drehbewegungen der Anhängevorrichtung relativ zum Kupplungskopf ausgeglichen werden können, andererseits bei Kurvenfahrten die Zugöse des angehängten Fahrzeuges problemlos relativ zum ziehenden Fahrzeug geschwenkt werden kann.

Bei dieser zuvor beschriebenen Weiterbildung der Anhängekupplung wird ferner vorgeschlagen, die erste, die zweite und die dritte Schwenkachse so zueinander verlaufen zu lassen, daß sie sich in einen gemeinsamen Schnittpunkt schneiden, der auf der Längsachse des Kupplungsbolzens liegt. Dabei ist es besonders vorteilhaft, wenn der Schnittpunkt dem Kupplungsmittelpunkt entspricht, in dem sich die Bolzenlängsachse des Kupplungsbolzens und die Längsachse der Anhängevorrichtung schneiden. Durch diese Art der Anordnung der drei Schwenkachsen zueinander und relativ zum Kupplungsbolzen wird erreicht, daß durch die am Kupplungsbolzen angreifenden Kräfte keine Drehmomente erzeugt werden, die andernfalls zu unerwünschten Schwenkbewegungen des Kupplungskopfes während der Fahrt des Fahrzeugzuges führen würden.

Zum schwenkbaren Lagern des Kupplungskopfes um die zweite Schwenkachse wird vorgeschlagen, den Kupplungskopf an einem Aufnahmerahmen zu lagern, der seinerseits von einer Zugstange gehalten wird. Die Zugstange hat einen in Längsrichtung des Fahrzeuges verlaufenden Lagerzapfen, mit dem sie um die in Längsrichtung des Fahrzeuges verlaufende erste Schwenkachse schwenkbar am Fahrzeug gelagert ist. Der Aufnahmerahmen kann als geschlossenes Rahmenelement ausgebildet sein, d.h. eine geschlossene, umlaufende Kontur bilden, in das der Kupplungskopf eingesetzt und an dem er durch Schwenkzapfen um die zweite Schwenkachse schwenkbar gelagert ist. Ferner ist es denkbar, den Aufnahmerahmen als offenes U-förmiges Profil auszubilden, das mit der Zugstange fest verbunden ist und an dessen beiden Schenkeln der Kupplungskopf schwenkbar gelagert ist.

Um den Kupplungskopf zusätzlich um die dritte Schwenkachse zu lagern, wie es bei der vorteilhaften Weiterbildung der Anhängekupplung vorgeschlagen wird, stehen vom freien Ende der Zugstange zusätzlich zwei Klauen ab, an denen der Aufnahmerahmen um die dritte Schwenkachse schwenkbar gelagert ist.

Des weiteren ist es von Vorteil, wenn der Kupplungskopf beispielsweise nach dem Abbiegen des Fahrzeugzuges wieder in eine neutrale Position zurückbewegt wird, in der das am Kupplungskopf ausgebildete Kupplungsmaul in seiner Längserstreckung parallel zur Längsrichtung des Fahrzeuges ausgerichtet ist. Zu diesem Zweck ist an der Anhängekupplung eine Rückstelleinrichtung vorgesehen, die mit einer vorgegebenen Kraft einer Schwenkbewegung des Kupplungskopfes um die zweite und gegebenenfalls dritte Schwenkachse entgegenwirkt. Als Rückstelleinrichtung eignet sich beispielsweise eine zwischen dem Kupplungskopf und dem Aufnahmerahmen angeordnete erste Federanordnung sowie gegebenenfalls eine zwischen dem Aufnahmerahmen und der Zugstange angeordnete zweite Federanordnung, mit deren Hilfe der Kupplungskopf in seine neutrale Position bewegt wird.

Des weiteren ist es denkbar, an der Anhängekupplung eine Verriegelungseinrichtung vorzusehen, mit der der Kupplungskopf in der neutralen Position relativ zum Fahrzeug arretierbar ist, um das An- und Abkuppeln des zu ziehenden Fahrzeuges zu erleichtern. Bei dieser Ausführungsform ist es jedoch nicht zwingend erforderlich, am Kupplungskopf die zuvor beschriebene Rückstelleinrichtung vorzusehen, die den Kupplungskopf in seine neutrale Position zurückstellt.

Bei einer abgewandelten Ausführungsform der Erfindung ist der Kupplungsbolzen nahe seinem freien Ende mit einem kleineren Durchmesser versehen, um in einem ersten Kupplungsschritt ein sicheres Einkuppeln zu gewährleisten. Im restlichen Abschnitt ist der Durchmesser des Kupplungsbolzens so gewählt, daß man in einem zweiten Kupplungsschritt eine nahezu spielfreie Kupplung der Zugöse erhält.

Als Lageranordnung für die Lagerung des Kupplungskopfes am Fahrzeug dient bei herkömmlichen Anhängekupplungen ein am Fahrzeug vorgesehenes Befestigungslager, in das eine Gleitlagerbuchse aus Messing oder Bronze eingesetzt ist, in der der Lagerzapfen des Kupplungskopfes aufgenommen ist. Zur Übertragung der beim Ziehen des an die Anhängekupplung gekuppelten Fahrzeuges entstehenden Zugkraft, die in Längsrichtung des Fahrzeuges wirkt, ist der Lagerzapfen gegen ein Herausziehen aus der Lageranordnung gesichert. Zu diesem Zweck ist es bekannt, am freien Ende des Lagerzapfens, das aus dem Befestigungslager ragt, eine Sicherungsmutter zu verschrauben, die an der dem Kupplungskopf abgewandten Stirnseite des Befestigungslagers anliegt. Ferner ist es bekannt, an Stelle einer Sicherungsmutter einen Sicherungsring zu verwenden, der in einer am Lagerzapfen ausgebildeten Nut aufgenommen ist und sich gleichfalls an dem Befestigungslager abstützt.

Neben der horizontalgerichteten Zugkraft entsteht während des Abbremsens eine am Kupplungskopf angreifende Schubkraft, die sich aus einer horizontalen und einer vertikalen Kraftkomponente zusammensetzt. Ferner wird durch die Masse des angehängten Fahrzeuges, insbesondere eines Zentralachsanhängers, eine Stützlast in vertikaler Richtung verursacht. Der Kraftangriffspunkt der Stützlast und der eventuell auftretenden Schubkraft ist durch die Position der Zugöse der Anhängegabel im Kupplungskopf vorgegeben. Durch den Abstand zwischen dem Kraftangriffspunkt und dem dem Kupplungskopf zugewandten Lageranfang der Gleitlagerbuchse entsteht durch die vertikale Stützlast und durch die eventuell auftretende Schubkraft ein Kippmoment, dessen Größe vom Abstand des Kraftangriffspunktes zum Lageranfang der Gleitlagerbuchse bestimmt ist. Durch das Kippmoment entsteht ein Lagerreaktionsmoment, dessen Größe von der Länge der Gleitlagerbuchse abhängt. die Größe des Lagerreaktionsmomentes bewirkt wiederum eine entsprechende Erhöhung der am Lageranfang wirkenden Lagerreaktionskraft. Dies bedeutet, daß die bei bekannten Anhängekupplungen verwendeten Gleitlagerbuchsen in axialer Richtung möglichst lang sein müssen, damit die von dem Lagerreaktionsmoment verursachte Erhöhung der Lagerreaktionskraft am Lageranfang möglichst klein ist.

Es ist daher eine weitere Aufgabe der Erfindung, eine Anhängekupplung anzugeben, die verglichen mit herkömmlichen Anhängekupplungen eine geringe axiale Baulänge hat.

Diese Aufgabe wird bei einer Anhängekupplung, bei welcher der Kupplungskopf mit einem Lagerzapfen verbunden ist, der in einer am Fahrzeug vorgesehenen Lageranordnung um seine in Fahrzeuglängsrichtung gerichtete Längsachse schwenkbar gelagert und gegen ein Herausziehen gesichert ist, dadurch gelöst, daß die Lageranordnung zwei in einer am Fahrzeug ausgebildeten Aufnahme gehaltene, einseitig wirkende Wälzlager hat, von denen jedes sich mit seinem Außenring in der Aufnahme abstützt und mit seinem Innenring am Lagerzapfen gehalten ist, und daß die Druckkegelspitzen der gegeneinander angestellten Wälzlager entgegengesetzt zueinander verlaufen. Vorteilhafte Weiterbildungen ergeben sich aus den weiteren Unteransprüchen.

Bei der Erfindung werden zum schwenkbaren Lagern des Lagerzapfens einseitig wirkende Wälzlager eingesetzt, d.h. Wälzlager, die sowohl Axial- als auch Radialkräfte aufnehmen können. die Wälzlager sind in axialer Richtung gegeneinander angestellt, wobei die Druckkegelspitzen, in entgegengesetzte Richtungen zeigen. Als Druckkegelspitze wird in diesem Zusammenhang der Schnittpunkt der Mantellinie des Druckkegels des Wälzlagers mit dessen Lagerachse verstanden. Durch diese Art der Wälzlageranordnung wird eine Lagerung mit großer Stützbasis gebildet, die auch bei kurzem Lagerabstand zwischen den beiden Wälzlagern ein großes Kippmoment aufnehmen kann. Dadurch ist es möglich, eine Anhängekupplung anzugeben, die einerseits so hohen Belastungen ausgesetzt werden kann wie herkömmliche Anhängekupplungen, sich aber andererseits durch eine vergleichsweise geringe axiale Baulänge auszeichnet.

Bei einer bevorzugten Ausführungsform ragt in die Aufnahme ein Absatz, an dessen achsnormalen Seitenflächen die Außenringe der beiden Wälzlager mit ihren einander zugewandten Stirnflächen anliegen, wodurch sichergestellt ist, daß auftretende Axialkräfte unmittelbar an die Aufnahme und damit an das Fahrzeug übertragen werden.

Um ein Wandern der Außenringe der Wälzlager in der Aufnahme zu vermeiden, das durch eine Umfangslast entsteht, wie sie beim Ziehen eines Fahrzeuges verursacht wird, wird vorgeschlagen, die Außenringe der beiden Wälzlager in die Aufnahme einzupressen, d.h. die Außenringe durch eine kraftschlüssige Verbindung wie einen Preßsitz in der Aufnahme zu sichern.

Zum Anstellen der beiden Wälzlager wird ein Aufbau vorgeschlagen, bei dem das nahe dem Kupplungskopf angeordnete vordere Wälzlager mit seinem Innenring an einer am Lagerzapfen vorgesehenen Schulter anliegt, während das nahe dem freien Ende des Lagerzapfens angeordnete hintere Wälzlager durch eine an seinem Innenring anliegende, mit dem Lagerzapfen verschraubte Einstellmutter gegen den Innenring des vorderen Wälzlagers angestellt ist.

Zum Anstellen der Wälzlager wird vorzugsweise eine Einstellmutter vorgeschlagen, die eine mit einem Innengewinde versehene Hülse hat, mit der sie auf das freie Ende des Lagerzapfens geschraubt ist und auf die der Innenring des hinteren Wälzlagers aufgeschoben ist. Von der Hülse der Einstellmutter steht in radialer Richtung ein Bund ab, an dem das Wälzlager mit der Stirnfläche seines Innenrings anliegt. Dadurch, daß das hintere Wälzlager unmittelbar auf der Einstellmutter gelagert ist, ist ein Austauschen eines beschädigten hinteren Wälzlagers schnell und auf einfache Weise möglich. Darüber hinaus wird bei einer Überbelastung des hinteren Wälzlagers einer Beschädigung des Lagerzapfens vorgebeugt. Um ein Verdrehen und Sichlösen der Einstellmutter zu vermeiden, wird ferner vorgeschlagen, die Einstellmutter durch ein Sicherungselement, vorzugsweise eine Sicherungsschraube gegen ein Verdrehen am freien Ende des Lagerzapfens zu sichern. Des weiteren ist es von Vorteil, wenn an der Einstellmutter eine Dichtfläche ausgebildet ist, die mit einer in der Aufnahme vorgesehenen schleifenden Dichtung in Berührung steht, um das hintere Wälzlager vor Verunreinigungen zu schützen.

Anstelle der zuvor beschriebenen Einstellmutter kann auch eine handelsübliche Wellenmutter oder Nutmutter verwendet werden, die auf das freie Ende des Lagerzapfens geschraubt ist. In diesem Fall muß auf dem Lagerzapfen für das hintere Wälzlager ein Lagersitz ausgebildet sein, auf den das hintere Wälzlager aufgeschoben wird.

Die Schulter, an der das vordere Wälzlager mit seinem Innenring anliegt, wird vorzugsweise durch eine auf den Lagerzapfen aufgeschobene Anstellscheibe gebildet, die mit ihrer einen Flachseite am Kupplungskopf und mit ihrer anderen Flachseite am Innenring des vorderen Wälzlagers anliegt. Durch die Verwendung der Anstellscheibe ist es möglich, den Übergang des Lagerzapfens in den Kupplungskopf mit einem großen Radius zu versehen, um Kerbwirkungen am Lagerzapfen zu vermeiden.

Um die Lageranordnung auch im Bereich des Kupplungskopfes abzudichten, wird ferner vorgeschlagen, an der Anstellscheibe eine koaxial zur Längsachse des Lagerzapfens verlaufende zylindrische Dichtfläche auszubilden, die mit einer in der Aufnahme vorgesehenen schleifenden Dichtung in Berührung steht.

Als schleifende Dichtungen wird sowohl für die Einstellschraube als auch für die Anstellscheibe vorzugsweise ein handelsüblicher Wellendichtring verwendet, der ohne großen Aufwand montiert werden kann, und eventuell bestehende Unebenheiten an der Dichtfläche ausgleichen kann.

Anstelle von Wellendichtringen können bei Fahrzeugen wie Baustellenfahrzeugen, die besonders stark verschmutzen, sogenannte Stopfbuchsenpackungen eingesetzt werden, die auch bei starken Verschmutzungen die Lageranordnung wirksam schützen können.

Bei einer Weiterbildung der Erfindung ist zusätzlich in der Aufnahme ein mit dem Lagerzapfen zusammenwirkendes Gehemme angeordnet, das ein der Drehbewegung des Lagerzapfens entgegenwirkendes Drehwiderstandsmoment beim Drehen des Lagerzapfens erzeugt. Dadurch wird erreicht, daß sich der Kupplungskopf nur dann dreht, wenn das durch die Gabel verursachte, am Kupplungskopf angreifende Drehmoment das durch das Gehemme vorgegebenen Drehwiderstandsmoment übersteigt.

Zum Erzeugen eines vorgegebenen Drehwiderstandsmomentes wird ein Gehemme vorgeschlagen, das einen am Lagerzapfen vorgesehenen Zahnring mit radial vom Lagerzapfen abstehenden, an der Spitze abgerundeten Zähnen und eine in der Aufnahme vorgesehene Rasteinrichtung hat, die mit dem Zahnring in Eingriff steht. Durch den vergleichsweise einfachen Aufbau des Gehemmes, insbesondere des Zahnringes, kann das Gehemme auch noch nachträglich in eine bereits montierte Anhängekupplung eingebaut werden.

Als Rasteinrichtung dient beispielsweise ein Raststift, der in einer in der Aufnahme ausgebildeten, radial zum Lagerzapfen ausgerichteten Bohrung verschieblich gelagert und durch eine in der Bohrung angeordnete Druckfeder in Richtung des Zahnringes vorgespannt ist und mit diesem in Eingriff steht. Zusätzlich kann der Raststift durch eine Einstellschraube in der Bohrung verstellbar sein, so daß entsprechend den auftretenden Drehmomenten an dem Kupplungskopf das Drehwiderstandsmoment verändert werden kann.

Das Gehemme kann auch so ausgebildet sein, daß sich ein Drehwiderstandsmoment erst nach einem vorgegebenen Rotationswinkel (z.B. +/-6°) aufbaut. Der Grund hierfür ist, daß alle Bewegungen der Zugöse während des normalen Fahrbetriebs von der Kupplung möglichst ohne Widerstand aufgenommen werden sollen.

Die Wälzlager sind vorzugsweise Kegelrollenlager, Schrägkugellager oder Pendelrollenlager, da diese Lagertypen sowohl große Radial- als auch Axialkräfte aufnehmen können. Dabei sollte die statische Kennzahl f_{f} der Wälzlager, d.h. das Verhältnis aus der statischen Tragzahl C₀ des Wälzlagers und der am Wälzlager angreifenden statisch äquivalenten Belastung P₀ in einem Bereich von 1,0 bis 1,5 liegen.

Nachfolgend wird die Erfindung an Hand eines Ausführungsbeispiels unter Bezugnahme auf die beigefügte Zeichnung näher erläutert. Darin zeigen:
- Figur 1: eine teilweise geschnittene Seitenansicht einer Ausführungsform einer Anhängekupplung, deren Kupplungskopf in einer neutralen Position relativ zum Fahrzeug gehalten ist,
- Figur 2: eine teilweise geschnittene Vorderansicht der Anhängekupplung nach Figur 1,
- Figur 3: einen vergrößerten Schnitt entlang der Schnittlinie A-A in Figur 2, in dem eine erste Federanordnung zum Vorspannen des Kupplungskopfes in die neutrale Position dargestellt ist,
- Figur 4: eine geschnittene Seitenansicht einer erfindungsgemäßen Lageranordnung für einen Kupplungskopf,
- Figur 5: eine Rückansicht des freien Endes eines Lagerzapfens der Anhängekupplung nach Figur 4,
- Figur 6: eine geschnittene Vorderansicht der Anhängekupplung entlang der Schnittlinie B-B in Figur 4 und
- Figur 7: eine abgewandelte Ausführungsform des Kupplungskopfes gemäß Figuren 1 bis 3 in Verbindung mit einer Lagerung gemäß Figuren 4 bis 6.

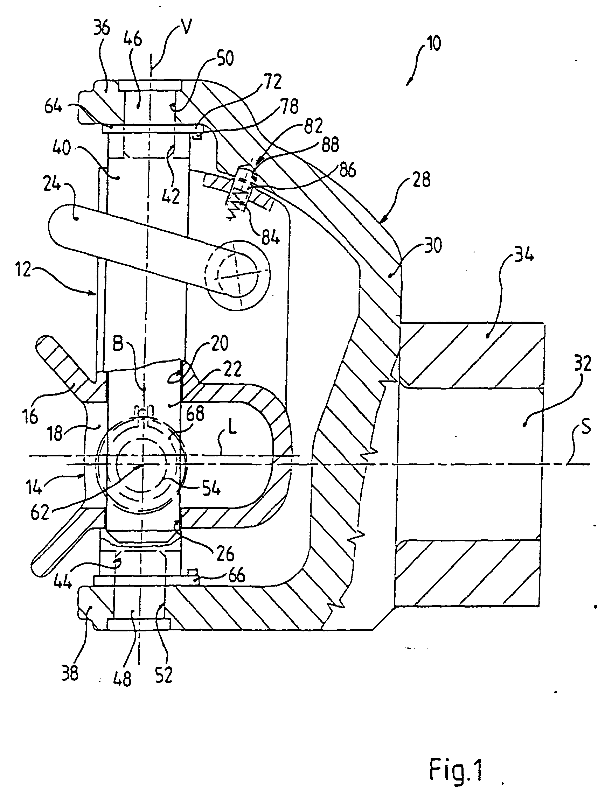

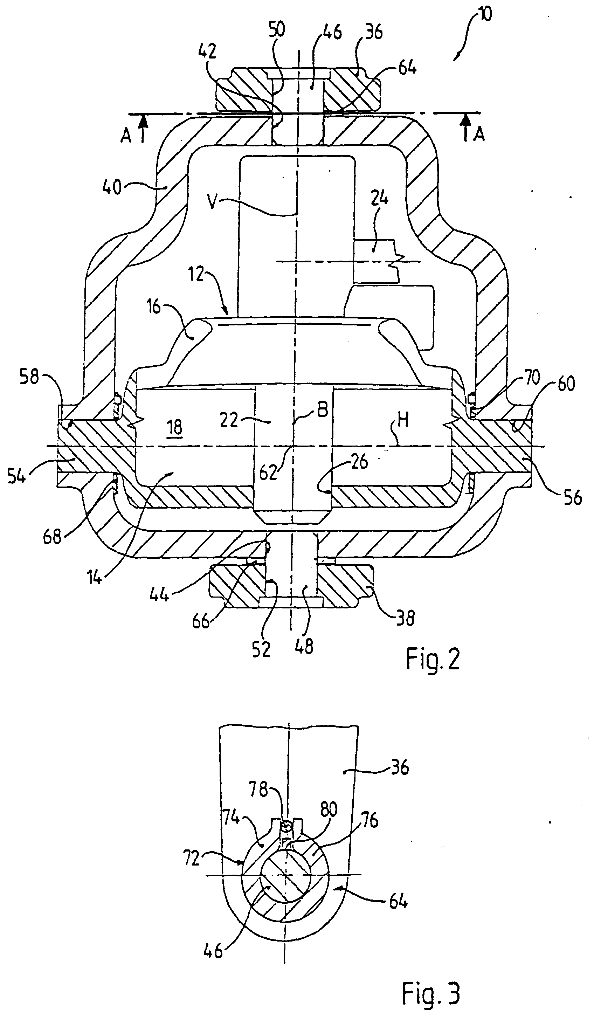

In den Figuren 1 und 2 ist eine Anhängekupplung 10 für ein Nutzkraftfahrzeug (nicht dargestellt) gezeigt. Die Anhängekupplung 10 hat einen Kupplungskopf 12, in dem ein Kupplungsmaul 14 ausgebildet ist. Das Kupplungsmaul 14 hat einen vom Kupplungskopf 12 abstehenden, trichterförmig erweiterten Führungsabschnitt 16 und eine im Kupplungskopf 12 ausgebildete Zugösenaufnahme 18, in die der Führungsabschnitt 16 mündet. In den Figuren 1 und 2 ist der Kupplungskopf 12 in seiner neutralen Position dargestellt, in der das Kupplungsmaul 14 mit seiner Längserstreckung L parallel zur Längsrichtung des Nutzkraftfahrzeuges verläuft.

Im Kupplungskopf 12 ist eine senkrecht zur Längserstreckung L des Kupplungsmaules 14 verlaufende, zylinderförmige Aufnahme 20 ausgebildet, in der ein Kupplungsbolzen 22 verschieblich gelagert ist. Mit Hilfe eines schwenkbar am Kupplungskopf 12 über der Zugösenaufnahme 18 gelagerten Steilhebels 24 kann der Kupplungsbolzen 22 zwischen einer Kupplungsposition (vgl. Figuren 1 und 2) und einer Entriegelungsposition (nicht dargestellt) verstellt werden. In der Kupplungsposition ragt der Kupplungsbolzen 22 in die Zugösenaufnahme 18 und greift in eine mit der Aufnahme 20 fluchtenden, in die Zugösenaufnahme 18 mündenden Durchgangsbohrung 26 ein. In der Entriegelungsposition ist der Kupplungsbolzen 22 in die Aufnahme 20 aus der Zugösenaufnahme 18 zurückgezogen. Zum Ankuppeln eines Anhängers beispielsweise eines Zentralachsanhängers wird zunächst der Kupplungsbolzen 22 mit Hilfe des Stellhebels 24 in die Entriegelungsposition bewegt und anschließend die Anhängevorrichtung des Anhängers mit ihrer Zugöse in die Zugösenaufnahme 18 hingeführt. Dabei kommt die Zugöse mit einer in der Zugösenaufnahme 18 angeordneten Auslösevorrichtung (nicht dargestellt) in Berührung, die den Kupplungsbolzen 22 in seine Kupplungsposition verstellt, oder der Kupplungsbolzen 22 wird mit Hilfe des Stellhebels 24 in seine Kupplungsposition bewegt.

Die Anhängekupplung 10 hat ferner eine Zugstange 28, mit der der Kupplungskopf 12 am Fahrzeug befestigt ist. Die Zugstange 28 hat eine Halteplatte 30, von deren dem Nutzkraftfahrzeug zugewandten Seite ein in Längsrichtung des Nutzkraftfahrzeuges verlaufender Lagerzapfen 32 absteht, der in Figur 1 rechts dargestellt ist. Der Lagerzapfen 32 ist in einem am Nutzkraftfahrzeug vorgesehenen Befestigungslager 34 um eine erste Schwenkachse S schwenkbar gelagert.

Von der dem Nutzkraftfahrzeug abgewandten Seite der Halteplatte 30 stehen zwei Klauen 36 und 38 ab, die zum schwenkbaren Lagern eines Aufnahmerahmens 40 um eine vertikale Schwenkachse V dienen. Zum schwenkbaren Lagern des in sich geschlossenen Aufnahmerahmens 40 sind an diesem zwei Lagerbohrungen 42 und 44 ausgebildet, die miteinander fluchten und die vertikale Schwenkachse V definieren. In jeder Lagerbohrung 42 bzw. 44 ist jeweils ein Schwenkzapfen 46 bzw. 48 schwenkbar gelagert, der in einer an der Klaue 36 bzw. 38 ausgebildeten Bohrung 50 bzw. 52 eingesetzt ist.

Wie in Figur 2 gezeigt, steht von den beiden Seitenflächen des Kupplungskopfes 12 jeweils ein Zapfen 54 und 56 ab, die gemeinsam eine horizontale Schwenkachse H definieren. Jeder Zapfen 54 und 56 ist in einer am Aufnahmerahmen 40 ausgebildeten Lageröffnung 58 bzw. 60 schwenkbar gelagert.

Wie in Figur 1 gezeigt, sind die Lageröffnungen 58 und 60 so am Aufnahmerahmen 40 angeordnet, daß die durch die Zapfen 54 und 56 definierte horizontale Schwenkachse H die Bolzenlängsachse B des Kupplungsbolzens 22 schneidet. Der Kupplungskopf 12 ist seinerseits so im Aufnahmerahmen 40 gelagert und zum Lagerzapfen 32 der Zugstange 28 ausgerichtet, daß die erste Schwenkachse S, um die die Zugstange 28 am Nutzkraftfahrzeug schwenkbar gelagert ist, gleichfalls die Bolzenlängsachse B des Kupplungsbolzens 22 schneidet. Die Bohrungen 50 und 52 an den Klauen 36 und 38 der Zugstange 28 sind so angeordnet, daß die von den beiden Schwenkzapfen 46 und 48 definierte vertikale Schwenkachse V mit der Bolzenlängsachse B des Kupplungsbolzen 22 zusammenfällt. Folglich schneiden sich die erste Schwenkachse S, die zweite horizontale Schwenkachse H und die dritte vertikale Schwenkachse V in einem gemeinsamen Schnittpunkt 62. Die Lage des Schnittpunktes 62 entlang der Bolzenlängsachse B des Kupplungsbolzens 12 ist dabei so gewählt, daß sie der Lage eines Kupplungsmittelpunktes entspricht, in dem sich die Bolzenlängsachse B und die Längsachse der Anhängevorrichtung des Anhängers schneiden, wenn dieser angekuppelt ist. In diesem Kupplungsmittelpunkt greifen die vertikalen und horizontalen Kräfte an, die während des Ziehens oder Abbremsens des Anhängers von der Zugöse (nicht dargestellt) an den Kupplungsbolzen 22 übertragen werden.

Um den Kupplungskopf 12 in der definierten neutralen Position relativ zum Nutzkraftfahrzeug zu halten, in der das am Kupplungskopf 12 ausgebildete Kupplungsmaul 14 mit seiner Längserstreckung L parallel zur Längsrichtung des Nutzkraftfahrzeuges ausgerichtet ist, ist an der Anhängekupplung 10 eine Rückstelleinrichtung vorgesehen. Die Rückstelleinrichtung hat an jedem Schwenkzapfen 46 und 48 sowie an jedem Zapfen 54 und 56 eine Federanordnung 64, 66, 68 bzw. 70. Da die Federanordnungen 64, 66, 68, und 70 an den Zapfen 46, 48, 54 und 56 identisch ausgebildet sind, wird nachfolgend unter Bezugnahme auf Figur 3 nur die am Schwenkzapfen 46 befestigte Federanordnung 64 beschrieben.

Die Federanordnung 64 hat eine auf den Schwenkzapfen 46 aufgeschobene, als geschlitzten Ring ausgebildete Rückstellfeder 72, deren beide Federschenkel 74 und 76 in die gleiche Richtung zeigen. Zwischen den beiden Federschenkeln 74 und 76 steht von der Klaue 36 in Richtung des Kupplungskopfes 12 ein Stift 78 ab, an dem die beiden Federschenkel 74 und 76 mit ihren einander zugewandten Innenseiten anliegen. Vom Schwenkzapfen 46 steht in radialer Richtung eine Nase 80 ab, die gleichfalls zwischen den Federschenkeln 74 und 76 aufgenommen ist. Der Stift 78 und die Nase 80 sind zueinander ausgerichtet und liegen auf einer gemeinsamen Linie, die parallel zur ersten Schwenkachse S verläuft, so daß der Aufnahmerahmen 40 den Kupplungskopf 12 in einer ersten Position hält, in der das Kupplungsmaul 14 mit seiner Längserstreckung L in einer parallel zur Längsrichtung des Nutzkraftfahrzeuges verlaufenden Ebene angeordnet ist.

Wird nun der Kupplungskopf 12 aus dieser ersten Position um die vertikale Schwenkachse V beispielsweise im Uhrzeigersinn der Figur 3 geschwenkt, liegt der Federschenkel 74 unter Vorspannung am Stift 78 an, während der Federschenkel 76 durch die Nase 80 vom Stift 78 wegbewegt wird. Dadurch wird die Rückstellfeder 72 gespannt und erzeugt eine Rückstellkraft, die der Drehbewegung des Kupplungskopfes 12 entgegenwirkt. Sobald die Kraft, mit der der Kupplungskopf 12 um die vertikale Schwenkachse V geschwenkt wurde, wieder abnimmt, bewegt die Rückstellfeder 72 den Aufnahmerahmen 40 und damit den Kupplungskopf 12 wieder zurück in seine erste Position.

Wie zuvor bereits erläutert, ist am Schwenkzapfen 48 und an den Zapfen 54 und 56 jeweils eine identisch aufgebaute Federanordnung 66, 68 bzw. 70 vorgesehen.

Während die Federanordnung 66 gemeinsam mit der Federanordnung 64 den Kupplungskopf 12 um die vertikale Schwenkachse V in der ersten Position hält, halten die beiden anderen Federanordnungen 68 und 70 an den Zapfen 54 und 56 den Kupplungskopf 12 um die horizontale Schwenkachse H in einer zweite Position, in der die Bolzenlängsachse B des Kupplungsbolzens 22 senkrecht zur Längsrichtung des Nutzkraftfahrzeuges verläuft. Durch das Zusammenwirken der Federanordnungen 64, 66, 68 und 70 wird der Kupplungskopf 12 in seiner neutralen Position gehalten, in der das am Kupplungskopf 12 ausgebildete Kupplungsmaul 14 mit seiner Längserstreckung L parallel zur Längsrichtung des Nutzkraftfahrzeuges ausgerichtet ist.

Des weiteren ist an der Anhängekupplung 10 eine Verriegelungseinrichtung 82 vorgesehen, mit der der Kupplungskopf 12 beim Ankuppeln und Abkuppeln der Zugöse in der neutralen Position arretierbar ist. Die Verriegelungseinrichtung 82 hat einen am Kupplungskopf 12 oberhalb des Stellhebels 24 angeordneten, durch eine Druckfeder 84 in Richtung der Zugstange 28 vorgespannten Verriegelungsbolzen 86, der mit einer an der oberen Klaue 36 der Zugstange 28 ausgebildeten Verriegelungsöffnung 88 in Eingriff gebracht werden kann. Die Verriegelungsöffnung 88 ist so an der oberen Klaue 36 angeordnet, daß der Kupplungskopf 12 in seiner neutralen Position gehalten ist, sobald der Verriegelungsbolzen 86 mit der Verriegelungsöffnung 88 in Eingriff kommt.

Der Verriegelungsbolzen 86 kann zwischen einer Arretierstellung, in der er mit der Verriegelungsöffnung 88 in Eingriff steht, und einer Freigabestellung bewegt werden, in der er aus der Verriegelungsöffnung 88 gezogen ist und den Kupplungskopf 12 zum Schwenken freigibt. Um den Verriegelungsbolzen 86 zwischen der Arretierstellung und der Freigabestellung zu bewegen, ist er mit dem Kupplungsbolzen 22 mechanisch gekoppelt. Sobald der Kupplungsbolzen 22 mit Hilfe des Stellhebels 24 in seine Entriegelungsposition bewegt wird, wird der Verriegelungsbolzen 86 in seine Verriegelungsstellung verstellt. Befindet sich der Kupplungskopf 12 beim Öffnen des Kupplungsbolzens 22 noch nicht in seiner neutralen Position, kann der Verriegelungsbolzen 86 nicht mit der Verriegelungsöffnung 88 in Eingriff kommen, sondern würde an der Innwand der Zugstange 26 anschlagen. Um dies zu vermeiden, wird der Kupplungsbolzen 86 durch die Druckfeder 84 elastisch vorgespannt in seine Verriegelungsstellung bewegt und liegt in einem solchen Fall mit seiner Spitze unter Vorspannung an der Innenwand der Zugstange 28 an, läßt jedoch noch eine Bewegung des Kupplungskopfes 12 zu. Wird der Kupplungskopf 12 nun in seine neutrale Position bewegt, rastet der Verriegelungsbolzen 86 in die Verriegelungsöffnung 88 ein. Sobald der Kupplungsbolzen 22 von seiner Entriegelungsposition in seine Kupplungsposition verstellt wird, bewegt sich der Verriegelungsbolzen 86 in seine Freigabestellung.

Soll nun ein Anhänger an das Nutzkraftfahrzeug angekuppelt werden, wird zunächst mit Hilfe des Stellhebels 24 der Kupplungsbolzen 22 in seine Entriegelungsposition bewegt, wobei der Verriegelungsbolzen 86 der Verriegelungseinrichtung 82 mit der Verriegelungsöffnung 88 in Eingriff gebracht wird und den Kupplungskopf 12 in seiner neutralen Position arretiert, in der er zuvor durch die Rückstelleinrichtung gehalten worden ist. Danach wird die Zugöse der Anhängevorrichtung des Anhängers in das Kupplungsmaul 14 eingeführt und anschließend der Kupplungsbolzen 22 mit Hilfe des Stellhebels 24 wieder in seine Kupplungsposition zurückbewegt. Dabei wird gleichzeitig der Verriegelungsbolzen 86 aus der Verriegelungsöffnung 88 gezogen. Der Kupplungskopf 12 kann dann sowohl um die horizontale Schwenkachse H als auch um die vertikale Schwenkachse V gegen die Kraft der Rückstelleinrichtung geschwenkt werden.

Kommt es nun während der Fahrt des Fahrzeugzuges beispielsweise aufgrund von Bodenunebenheiten zu vertikalen und horizontalen Relativbewegungen zwischen dem Nutzkraftfahrzeug und dem Anhänger, ermöglicht der um die horizontale Schwenkachse H und die vertikale Schwenkachse V schwenkbare Kupplungskopf 12 Relativbewegungen zwischen dem ziehenden Fahrzeug und dem Anhänger in alle erdenkliche Richtungen, wobei die Beweglichkeit des Kupplungskopfes 12 nur durch dessen Position am Fahrzeugheck beschränkt ist. Gleichzeitig ermöglicht die schwenkbare Lagerung des Lagerzapfens 32 eine Schwenkbewegung der Zugstange 28 und damit auch eine Schwenkbewegung des Aufnahmerahmens 40 sowie des Kupplungskopfes 12 um die erste Schwenkachse S, so daß eventuell während der Fahrt auftretende relative Drehbewegungen zwischen dem Nutzkraftfahrzeug und dem Anhänger um die Längsachse des Fahrzeugzuges ausgeglichen werden können.

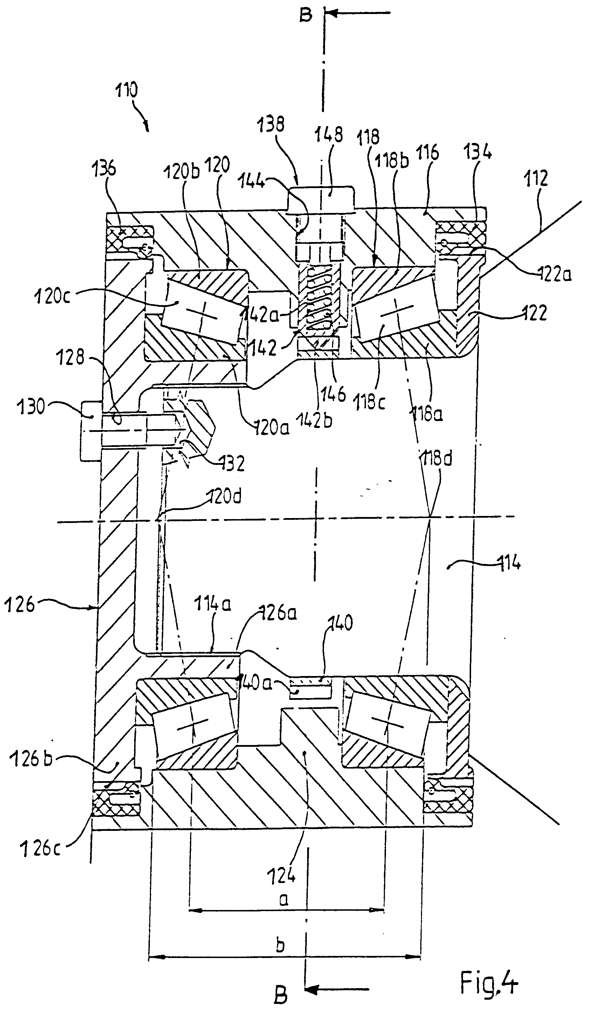

In Figur 4 ist eine Anhängekupplung 110 für einen Nutzkraftwagen (nicht dargestellt) gezeigt. Die Anhängekupplung 110 hat einen nur teilweise dargestellten Kupplungskopf 112, der mit seinem in Längsrichtung des Nutzkraftwagens verlaufenden Lagerzapfen 114 in einer am Nutzfahrzeug ausgebildeten Aufnahme 116 mit Hilfe von zwei in die Aufnahme 116 eingesetzten Kegelrollenlager 118 und 120 schwenkbar gelagert ist, wie nachfolgend erläutert wird.

Auf den Lagerzapfen 114 ist eine Anstellscheibe 122 aufgeschoben, die mit ihrer einen Flachseite an der Rückseite des Kupplungskopfes 112 anliegt. Die andere Flachseite der Anstellscheibe 122 dient als Schulter für das nahe dem Kupplungskopf 112 angeordnete vordere Kegelrollenlager 118, das mit seinem Innenring 118a auf den Lagerzapfen 114 aufgeschoben ist und sich mit dem axial hervorstehenden Abschnitt eines Innenrings 118a (in Figur 4 rechts dargestellt) an der Flachseite der Anstellscheibe 122 abstützt. Der Außenring 118b des Kegelrollenlagers 118 ist in die Aufnahme 116 eingepreßt und liegt mit seiner dem Kupplungskopf 112 abgewandten Stirnfläche an der achsnormalen Seitenfläche eines in die Aufnahme 116 ragenden Absatzes 124 an. Dabei übertragen die zwischen dem Innenring 118a und dem Außenring 118b angeordneten Kegelrollen 118c des Kegelrollenlagers 118 Axial- und Radialkräfte, während sie gleichzeitig eine relative Drehbewegung zwischen dem Innenring 118a und dem Außenring 118b ermöglichen.

Das nahe dem freien Ende des Lagerzapfens 114 angeordnete hintere Kegelrollenlager 120 ist gleichfalls mit seinem Außenring 120b in die Aufnahme 116 eingepreßt und stützt sich mit diesem an der anderen achsnormalen Seitenfläche des Absatzes 124 ab. Der Innenring 120a des hinteren Kegelrollenlagers 120 ist auf eine Einstellmutter 126 aufgeschoben, deren Aufbau nachfolgend erläutert wird.

Die Einstellmutter 126 hat eine in axialer Richtung verlaufende, hohlzylinderförmige Hülse 126a, in der ein Innengewinde 126b ausgebildet ist, das mit einem am freien Ende des Lagerzapfens 114 ausgebildeten Außengewinde 114a in Eingriff steht. die Außenumfangsfläche der Hülse 126a ist als Lagersitz für den Innenring 120a des hinteren Kegelrollenlagers 120 ausgebildet. Der Innenring 120a ist so auf den Lagersitz aufgeschoben, daß die Verbindung zwischen Innenring 120a und Lagersitz als Spielpassung ausgebildet ist. Von der Hülse 126a der Einstellmutter 126 steht ein Bund 126b in radialer Richtung ab, der als Schulter für den axial hervorstehenden Abschnitt des Innenrings 120a dient.

Wie in Figur 4 gezeigt, sind die beiden Kegelrollenlager 118 und 120 identisch ausgebildet und spiegelbildlich zueinander angeordnet, wobei die Druckkegelspitzen 118d und 120d der beiden Kegelrollenlager 118 und 120 in entgegengesetzte axiale Richtungen zeigen. Durch Anziehen der Einstellmutter 126 wird der Innenring 120a des hinteren Kegelrollenlagers 120 gegen dessen Kegelrollen 120c angestellt, wobei die entstehende Vorspannkraft durch die Kegelrollen 120c an den Außenring 120b des hinteren Kegelrollenlagers 120 und von diesem über den Absatz 124 an den Außenring 118b des vorderen Kegelrollenlagers 118 übertragen wird. Der Außenring 118b des vorderen Kegelrollenlagers 118 leitet seinerseits die Vorspannkraft über die Kegelrollen 118c und den Innenring 118a an die Anstellscheibe 122 und damit an den Kupplungskopf 112 weiter.

Durch diese als O-Anordnung bezeichnete Art der Anstellung der Kegelrollenlager 118 und 120 ist die Lageranordnung in der Aufnahme 116, trotz des geringen Lagerabstandes a zwischen den Kegelrollenlagern 118 und 120, in der Lage, ein hohes Kippmoment aufzunehmen, das entsteht, wenn am Kupplungskopf 112 Kräfte in vertikaler Richtung angreifen. Da für die mechanische Belastbarkeit der Abstand b zwischen den Druckkegelspitzen 118d und 120d und nicht der Lagerabstand a zwischen den Kegelrollenlagern 118 und 120 entscheidend ist, hat die Lageranordnung trotz ihrer geringen axialen Baulänge eine vergleichsweise große Stützbasis und kann daher verglichen mit einer Gleitlageranordnung gleicher axialer Baulänge einer herkömmlichen Anhängekupplung entsprechend hohe Kippmomente aufnehmen.

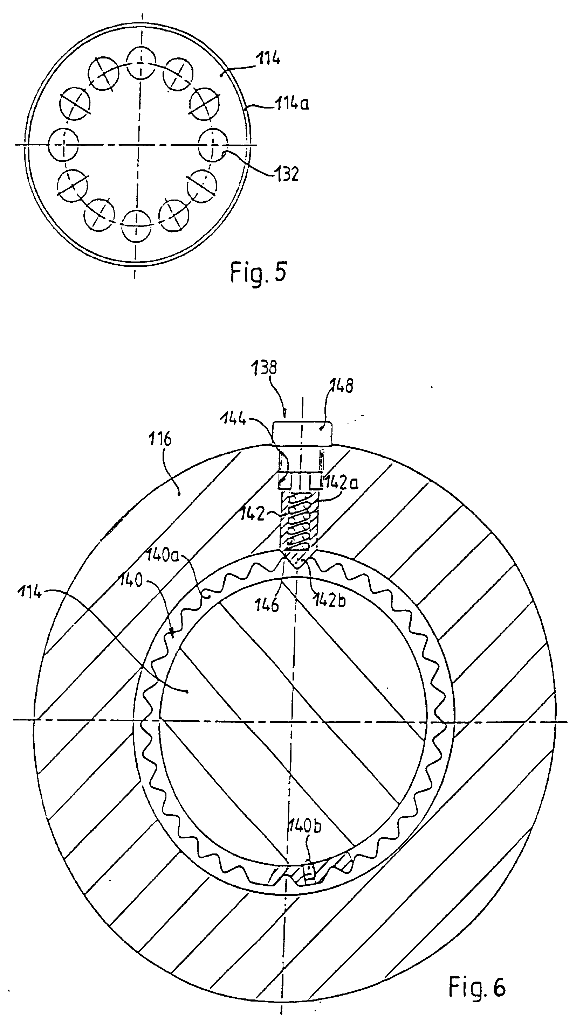

Um die Einstellmutter 126 in ihrer Lage zu fixieren, ist an deren Stirnseite exzentrisch zur Symmetrieachse der Einstellmutter 126 ein Durchgangsgewinde 128 ausgebildet, in das eine Sicherungsschraube 130 eingeschraubt ist. Die Sicherungsschraube 130 steht mit einem von mehreren an der Stirnseite des Lagerzapfens 114 ausgebildeten, zu dem Durchgangsgewinde 128 ausgerichteten Sacklöchern 132 in Eingriff. Wie Figur 5 zeigt, haben die Sacklöcher 132 jeweils gleichen radialen Abstand zum Mittelpunkt des Lagerzapfens 114 und sind mit gleichbleibendem Winkelabstand zueinander angeordnet. Dadurch ist es möglich, die Einstellmutter 126 in verschiedenen Positionen anzuziehen und zu fixieren.

Damit die Kegelrollenlager 118 und 120 nicht durch von außen eindringende Verunreinigungen beschädigt werden, sind an der Aufnahme 116 zusätzlich zwei Wellendichtringe 134 und 136 vorgesehen. Der zwischen dem Kupplungskopf 112 und dem vorderen Kegelrollenlager 118 angeordnete vordere Wellendichtring 134, steht mit seiner Dichtlippe mit einer an der Anstellscheibe 122 ausgebildeten, konzentrisch zur Längsachse des Lagerzapfens 114 verlaufenden, zylindrischen Dichtfläche 122a in Berührung. Der hintere Wellendichtring 136 ist an der hinteren Stirnseite der Aufnahme 116 angeordnet und steht mit seiner Dichtlippe mit einer am Bund 126b der Einstellmutter 126 ausgebildeten, als Dichtfläche dienenden zylindrischen Umfangsfläche 126c in Berührung.

Wie die Figuren 4 und 6 weiter zeigen, ist an der Anhängekupplung 110 ein Gehemme 138 vorgesehen, mit dem ein einer Drehbewegung des Kupplungskopfes 112 entgegenwirkendes Drehwiderstandsmoment eingestellt werden kann. Das Gehemme 138 hat einen fest mit dem Lagerzapfen 114 verbundenen, auf diesen aufgeschobenen Zahnring 140, der zwischen den Kegelrollenlagern 118 und 120 angeordnet ist. Der Zahnring 140 hat mehrere radial abstehende Zähne 140a, die jeweils an den Zahnspitzen abgerundet sind, und ist durch eine Stiftschraube 140b zusätzlich am Lagerzapfen 114 gesichert. Mit dem Zahnring 140 steht ein Raststift 142 in Eingriff, der in einer radial zur Längsachse des Lagerzapfens 114 verlaufenden, in der Wand der Aufnahme 116 ausgebildeten Stufenbohrung 144 verschieblich gelagert ist. An der dem Zahnring 140 abgewandten Stirnseite des Raststiftes 142 ist eine Aufnahmebohrung 142a ausgebildet, in der eine Druckfeder 146 aufgenommen ist. Die Druckfeder 146 stützt sich mit ihrem einen Ende an der Stirnfläche der Aufnahmebohrung 142a ab, während das aus dem Raststift 142 ragende andere Ende an der Stirnfläche einer Einstellschraube 148 anliegt, die in ein in der Stufenbohrung 144 ausgebildetes Innengewinde eingeschraubt ist.

Durch die Kraft der Druckfeder 146 wird der Raststift 142 so vorgespannt, daß er mit seiner Spitze 142b zwischen den Zähnen 140a des Zahnringes 140 positioniert ist. Sobald am Kupplungskopf 112 ein Drehmoment angreift, das beispielsweise durch eine Drehbewegung der an den Kupplungskopf 112 angekuppelten Anhängevorrichtung verursacht wird, muß die durch das Drehmoment des Kupplungskopfes 112 verursachte Kraft den Raststift 142 gegen die Vorspannkraft der Druckfeder 146 in die Stufenbohrung 144 zurück drücken, damit die Spitze 142b des Raststiftes 142 außer Eingriff mit dem Zahngrund zwischen den Zähnen 140a kommt und über die Zahnspitzen der Zähne 140a gleitet. Reicht die durch das am Kupplungskopf 112 angreifende Drehmoment verursachte Kraft nicht mehr aus, den Raststift 142 in die Stufenbohrung 144 zurück zu drücken, kann der Kupplungskopf 112 nicht weiter geschwenkt werden.

Durch Justieren der Einstellschraube 148 kann die Kraft, mit der der Raststift 142 gegen den Zahnring 140 vorgespannt ist, eingestellt werden. Dadurch kann die Höhe des Drehwiderstandsmomentes, das der Schwenkbewegung des Kupplungskopfes 112 entgegenwirkt, verändert werden.

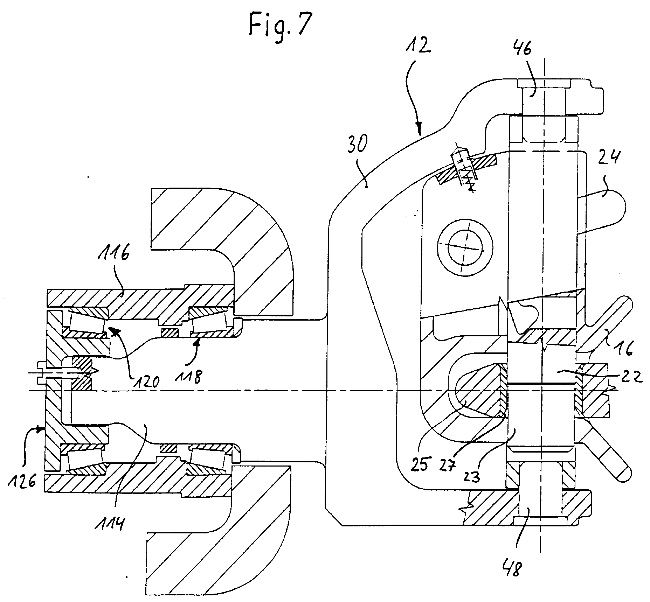

Die Figur 7 zeigt eine teilweise geschnittene Seitenansicht eines Kupplungskopfes, wie er an Hand der Figuren 1 bis 3 beschrieben wurde in Verbindung mit einer Lagerung, wie sie an Hand der Figuren 4 bis 6 beschrieben wurde. Gleiche Teile sind mit gleichen Bezugszeichen versehen.

In Abwandlung des in den Figuren 1 bis 3 dargestellten Kupplungskopfes 12 hat der Kupplungsbolzen 22 angrenzend an sein freies unteres Ende einen Abschnitt 23, dessen Durchmesser gegenüber dem restlichen Kupplungsbolzen 22 geringfügig kleiner ist. Dies erleichtert das Einführen des Kupplungsbolzens 22 in die Zugöse 25 und gewährleistet damit ein sicheres Einkuppeln. In dem oberen durchmessergrößeren Teil des Kupplungsbolzens 22 ist der Durchmesser so gewählt, daß der Kupplungsbolzen 22 praktisch spielfrei in dem Auge 27 der Zugöse 25 sitzt.

## Patentansprüche

1. Anhängekupplung für ein Fahrzeug, insbesondere für ein Nutzkraftfahrzeug, mit einem um eine in Längsrichtung des Fahrzeuges verlaufende erste Schwenkachse (S) schwenkbaren Kupplungskopf (12), in dessen Kupplungsmaul (14) ein verstellbarer Kupplungsbolzen (22) zum Ankuppeln einer in das Kupplungsmaul (14) eingeführten Zugöse einer Anhängevorrichtung ragt, wobei der Kupplungskopf (12) um eine senkrecht zur Bolzenlängsachse (B) des Kupplungsbolzens (22) verlaufende zweite Schwenkachse (H) schwenkbar ist, dadurch **gekennzeichnet,** daß die zweite Schwenkachse (H) die Bolzenlängsachse (B) des Kupplungsbolzens (22) schneidet.

2. Anhängekupplung nach Anspruch 1, dadurch **gekennzeichnet**, daß sich die erste Schwenkachse (S) und die zweite Schwenkachse (H) schneiden.

3. Anhängekupplung nach Anspruch 1 oder 2, dadurch **gekennzeichnet**, daß die zweite Schwenkachse (H) und ein Kupplungsmittelpunkt (62), in dem sich die Bolzenlängsachse (B) des Kupplungsbolzens (22) und die Längsachse der Anhängevorrichtung schneiden, in einer parallel zur Längsrichtung des Fahrzeuges verlaufenden gemeinsamen Ebene liegen.

4. Anhängekupplung nach Anspruch 1, 2 oder 3, dadurch **gekennzeichnet**, daß der Kupplungskopf (12) um eine mit der Bolzenlängsachse (B) des Kupplungsbolzens (22) zusammenfallende dritte Schwenkachse (V) schwenkbar ist.

5. Anhängekupplung nach Anspruch 4, dadurch **gekennzeichnet,** daß sich die erste, die zweite und die dritte Schwenkachse (S, H, V) in einem gemeinsamen Schnittpunkt (62) schneiden, der auf der Bolzenlängsachse (B) des Kupplungsbolzens (22) liegt.

6. Anhängekupplung nach den Ansprüchen 3 und 5, dadurch **gekennzeichnet,** daß der Schnittpunkt (62) dem Kupplungsmittelpunkt entspricht, in dem sich die Bolzenlängsachse (B) des Kupplungsbolzens (22) und die Längsachse der Anhängevorrichtung schneiden.

7. Anhängekupplung nach einem der vorhergehenden Ansprüche**, gekennzeichnet** durch einen Aufnahmerahmen (40) für den Kupplungskopf (12), in dem dieser um die zweite Schwenkachse (H) schwenkbar gelagert ist, und durch eine Zugstange (28), die einen in Längsrichtung des Fahrzeuges verlaufenden Lagerzapfen (32) hat, mit dem sie um die erste Schwenkachse (S) schwenkbar am Fahrzeug gelagert ist, und an derem freien Ende der Aufnahmerahmen (40) gehalten ist.

8. Anhängekupplung nach einem der Ansprüche 4 bis 6 und dem Anspruch 7, dadurch **gekennzeichnet,** daß vom freien Ende der Zugstange (28) zwei Klauen (36, 38) abstehen, an denen der Aufnahmerahmen (40) um die dritte Schwenkachse (V) schwenkbar gelagert ist.

9. Anhängekupplung nach Anspruch 8, dadurch **gekennzeichnet,** daß von entgegengesetzten Seiten des Kupplungskopfes (12) zwei miteinander fluchtende erste Schwenkzapfen (54, 56) abstehen, die zum schwenkbaren Lagern des Kupplungskopfes (12) um die zweite Schwenkachse (H) in zwei am Aufnahmerahmen ausgebildeten Lageröffnungen (58, 60) aufgenommen sind, und daß zum schwenkbaren Lagern des Aufnahmerahmens (40) um die dritte Schwenkachse (V) von diesem zwei miteinander fluchtende zweite Schwenkzapfen (46, 48) abstehen, die jeweils in einer an den Klauen (36, 38) der Zugstange (28) ausgebildeten Bohrung (50, 52) aufgenommen sind.

10. Anhängekupplung nach einem der vorhergehenden Ansprüche, **gekennzeichnet** durch eine Rückstelleinrichtung (64, 66, 68, 70) zum Halten des Kupplungskopfes (12) in einer neutralen Position, in der das am Kupplungskopf (12) ausgebildete Kupplungsmaul (14) mit seiner Längserstreckung (L) parallel zur Längsrichtung des Fahrzeuges ausgerichtet ist, wobei die Rückstelleinrichtung (64, 66, 68, 70) mit einer vorgegebenen Kraft einer Schwenkbewegung des Kupplungskopfes (12) um die zweite und gegebenenfalls drille Schwenkachse (H, V) entgegenwirkt.

11. Anhängekupplung nach den Ansprüchen 7 und 10, dadurch **gekennzeichnet,** daß die Rückstelleinrichtung mindestens eine zwischen dem Kupplungskopf (12) und dem Aufnahmerahmen (40) angeordnete erste Federanordnung (68, 70) hat, die einer Schwenkbewegung des Kupplungskopfes (12) um die zweite Schwenkachse (H) entgegenwirkt und den Kupplungskopf (12) in einer ersten Position hält, in der die Bolzenlängsachse (B) des Kupplungsbolzens (22) senkrecht zur Längsrichtung des Fahrzeuges verläuft.

12. Anhängekupplung nach den Ansprüchen 8 und 11, dadurch **gekennzeichnet,** daß die Rückstelleinrichtung mindestens eine zwischen dem Aufnahmerahmen (40) und der Zugstange (28) angeordnete zweite Federanordnung (64, 66) hat, die einer Schwenkbewegung des Aufnahmerahmens (40) um die dritte Schwenkachse (V) entgegenwirkt und den Aufnahmerahmen (40) in einer zweiten Position hält, in der das Kupplungsmaul (14) mit seiner Längserstreckung (L) in einer parallel zur Längsrichtung des Fahrzeuges verlaufenden Ebene angeordnet ist.

13. Anhängekupplung nach den Ansprüchen 9 und 12, dadurch **gekennzeichnet,** daß die erste Federanordnung (68, 70) jeweils eine auf jedem ersten Schwenkzapfen (54, 56) des Kupplungskopfes (12) aufgeschobene erste Rückstellfeder hat, die sich in Abhängigkeit von der Schwenkrichtung um die zweite Schwenkachse (H) mit ihrem einen Schenkel am Kupplungskopf (12) bzw. am Aufnahmerahmen (40) und mit ihrem anderen Schenkel am Aufnahmerahmen (40) bzw. am Kupplungskopf (12) abstützt, und daß die zweite Federanordnung (64, 66) jeweils eine auf jedem zweiten Schwenkzapfen (46, 48) des Aufnahmerahmens (40) aufgeschobene zweite Rückstellfeder (72) hat, die sich in Abhängigkeit von der Schwenkrichtung um die dritte Schwenkachse (V) mit ihrem einen Schenkel (74) am Aufnahmerahmen (40) bzw. an der Zugstange (28) und mit ihrem anderen Schenkel (76) an der Zugstange (28) bzw. am Aufnahmerahmen (40) abstützt.

14. Anhängekupplung nach einem der vorhergehenden Ansprüche**, gekennzeichnet** durch eine Verriegelungseinrichtung (82), mit der der Kupplungskopf (12) in einer neutralen Position relativ zum Fahrzeug arretierbar ist, in der das am Kupplungskopf (12) ausgebildete Kupplungsmaul (14) mit seiner Längserstreckung (L) parallel zur Längsrichtung des Fahrzeuges ausgerichtet ist.

15. Anhängekupplung nach Anspruch 14, dadurch **gekennzeichnet**, daß als Verriegelungseinrichtung (82) ein am Kupplungskopf (12) vorgesehener verstellbarer Verriegelungsbolzen (86) dient, der zwischen einer Arretierstellung, in der er mit einer am Fahrzeug bzw. an der Zugstange (28) ausgebildeten Verriegelungsöffnung (88) in Eingriff steht und den Kupplungskopf (12) in der neutralen Position hält, und einer Freigabestellung bewegbar ist, in der er aus der Verriegelungsöffnung (88) gezogen ist und den Kupplungskopf (12) zum Schwenken freigibt.

16. Anhängekupplung nach Anspruch 15, dadurch **gekennzeichnet**, daß der Verriegelungsbolzen (86) derart mit dem Kupplungsbolzen (22) mechanisch gekoppelt ist, daß sich der Verriegelungsbolzen (86) in seine Verriegelungsstellung bewegt, wenn der Kupplungsbolzen (22) in seine Entriegelungsposition bewegt wird, in der er aus dem Kupplungsmaul (14) zumindest teilweise wegbewegt ist, und daß sich der Verriegelungsbolzen (86) in seine Freigabestellung bewegt, wenn der Kupplungsbolzen (22) in seine Kupplungsposition bewegt wird, in der er zum Ankuppeln der Zugöse in das Kupplungsmaul (14) ragt.

17. Anhängekupplung nach einem der vorhergehenden Ansprüche, dadurch **gekennzeichnet**, daß der Kupplungsbolzen (22) in einem an sein freies Ende angrenzenden Abschnitt (23) einen gegenüber dem restlichen Kupplungsbolzen geringeren Durchmesser hat.

18. Anhängekupplung für ein Fahrzeug, insbesondere nach einem der Ansprüche 1 bis 17, dadurch **gekennzeichnet**, daß der Kupplungskopf (112) mit einem Lagerzapfen (114) verbunden ist, der in einer am Fahrzeug vorgesehenen Lageranordnung (118, 120) um seine in Fahrzeuglängsrichtung gerichtete Längsachse schwenkbar gelagert und gegen ein Herausziehen gesichert ist, daß die Lageranordnung zwei in einer am Fahrzeug ausgebildeten Aufnahme (116) gehaltene, einseitig wirkende Wälzlager (118, 120) hat, von denen jedes sich mit seinem Außenring (118b, 120b) in der Aufnahme (116) abstützt und mit seinem Innenring (118a, 120a) am Lagerzapfen (114) gehalten ist, und daß die Druckkegelspitzen (118d, 120d) der gegeneinander angestellten Wälzlager (118, 120) entgegengesetzt zueinander verlaufen.

19. Anhängekupplung nach Anspruch 16 dadurch **gekennzeichnet**, daß die Außenringe (118b, 120b) der beiden Wälzlager (118, 120) mit ihren einander zugewandten Stirnflächen an den achsnormalen Seitenflächen eines in die hohlzylinderförmige Aufnahme ragenden Absatzes (24) anliegen.

20. Anhängekupplung nach Anspruch 18 oder 19, dadurch **gekennzeichnet**, daß die Außenringe (118b, 120b) der beiden Wälzlager (118, 120) in die Aufnahme (116) eingepreßt sind.

21. Anhängekupplung nach einem der Ansprüche 18 bis 20, dadurch **gekennzeichnet**, daß das nahe dem Kupplungskopf (112) angeordnete vordere Wälzlager (118) mit seinem Innenring (118a) an einer am Lagerzapfen (114) vorgesehenen Schulter (122) anliegt, und daß das nahe dem freien Ende des Lagerzapfens (114) angeordnete hintere Wälzlager (120) durch eine an seinem Innenring (120a) anliegende, mit dem Lagerzapfen (114) verschraubte Einstellmutter (126) gegen den Innenring (118a) des vorderen Wälzlagers (118) angestellt ist.

22. Anhängekupplung nach Anspruch 21, dadurch **gekennzeichnet**, daß die Einstellmutter (126) eine mit einem Innengewinde versehene Hülse (126a) hat, mit der sie auf das freie Ende des Lagerzapfens (114) geschraubt ist und auf der der Innenring (120a) des hinteren Wälzlagers (120) aufgeschoben ist, und daß von der Hülse (126a) in radialer Richtung ein Bund (126b) absteht, an dem das hintere Wälzlager (120) mit der Stirnfläche seines Innenrings (120a) anliegt.

23. Anhängekupplung nach Anspruch 21 oder 22, dadurch **gekennzeichnet**, daß die Einstellmutter (126) durch ein Sicherungselement, vorzugsweise eine Sicherungsschraube (130) gegen ein Verdrehen am freien Ende des Lagerzapfens (114) gesichert ist.

24. Anhängekupplung nach einem der Ansprüche 21 bis 23, dadurch **gekennzeichnet**, daß an der Einstellmutter (126) eine Dichtfläche (126c) ausgebildet ist, die mit einer in der Aufnahme (116) vorgesehenen schleifenden Dichtung (136) in Berührung steht.

25. Anhängekupplung nach einem der Ansprüche 21 bis 24, dadurch **gekennzeichnet**, daß die Schulter durch eine auf den Lagerzapfen (114) aufgeschobene Anstellscheibe (122) gebildet ist, die mit ihrer einen Flachseite am Kupplungskopf (112) und mit ihrer anderen Flachseite am Innenring (118a) des vorderen Wälzlagers (118) anliegt.

26. Anhängekupplung nach Anspruch 25, dadurch **gekennzeichnet**, daß an der Anstellscheibe (122) eine koaxial zur Längsachse des Lagerzapfens (114) verlaufende zylindrische Dichtfläche (122a) ausgebildet ist, die mit einer in der Aufnahme (116) vorgesehenen schleifenden Dichtung (134) in Berührung steht.

27. Anhängekupplung nach Anspruch 24 oder 26, dadurch **gekennzeichnet**, daß die schleifende Dichtung ein in der Aufnahme (116) gehaltener Wellendichtring (134, 136) ist.

28. Anhängekupplung nach einem der vorhergehenden Ansprüche, **gekennzeichnet** durch ein in der Aufnahme (116) angeorenetes, mit dem Lagerzapfen (114) zusammenwirkendes Gehemme (138), das ein der Drehbewegung des Lagerzapfens (114) entgegenwirkendes Drehwiderstandsmoment beim Drehen des Lagerzapfens (114) erzeugt.

29. Anhängekupplung nach Anspruch 28, dadurch **gekennzeichnet**, daß das Gehemme (138) einen am Lagerzapfen (114) vorgesehenen Zahnring (140) mit radial vom Lagerzapfen (114) abstehenden, an der Spitze abgerundeten Zähnen (140a) und eine in der Aufnahme (116) vorgesehene Rasteinrichtung (142, 144, 146, 148) hat die mit dem Zahnring (140) in Eingriff steht.

30. Anhängekupplung nach Anspruch 29, dadurch **gekennzeichnet**, daß die Rasteinrichtung ein Raststift (142) ist, der in einer in der Aufnahme (116) ausgebildeten, radial zum Lagerzapfen (114) ausgerichteten Bohrung (144) verschieblich gelagert und durch eine in der Bohrung (144) angeordnete Druckfeder (146) in Richtung des Zahnringes (140) vorgespannt ist und mit diesem in Eingriff steht.

31. Anhängekupplung nach Anspruch 30, dadurch **gekennzeichnet**, daß der Raststift (142) durch eine Einstellschraube (148) in der Bohrung (144) verstellbar ist.

32. Anhängekupplung nach einem der vorhergehenden Ansprüche, dadurch **gekennzeichnet**, daß die Wälzlager Kegelrollenlager (118, 120), Schrägkugellager oder Pendelrollenlager sind.

33. Anhängekupplung nach einem der vorhergehenden Ansprüche, dadurch **gekennzeichnet**, daß die statische Kennzahl fₛ der Wälzlager (118, 120) in einem Bereich von 1,0 bis 1,5 liegt.
